# EUROPEAN PATENT SPECIFICATION

(11) **EP 1 612 138 B1**
(45) Date of publication and mention of the grant of the patent: **22.04.2009**
(21) Application number: 04015665.5
(22) Date of filing: 02.07.2004
(51) Int. Cl.: B64C 1/12, F16B 5/06, B60R 13/02

(54) **Holder for a panel in an aircraft**
Paneelhalterung in einem Flugzeug
Support de panneau dans un avion

(43) Date of publication of application: 04.01.2006
(73) Proprietor: Airbus Deutschland GmbH, 21129 Hamburg (DE)
(72) Inventor: Tjon, Robert, 2353 EA Leiderdorp (NL); Röpke, Stephan, 23966 Wismar (DE)
(74) Representative: Maiwald Patentanwalts GmbH

(56) References cited:
- GB-A- 2 211 240
- US-A- 4 490 883
- US-A1- 2003 190 846
- US-B1- 6 431 585

## Description

### Field of the invention

The present invention relates to a holder, for example, for a panel in an aircraft. In particular, the holder may be adapted for attaching a light cover to a structure in an aircraft. Furthermore, the present invention relates to a method of attaching a panel to a structure of an aircraft.

### Background of the invention

It is known to attach panels to structures of an aircraft with screw-like elements. However, there is a problem that loose elements, such as the screw-like elements may be lost during assembly which may require an extensive search since such loose elements may not be left on aircraft before it gets into service.

US 4,490,883 discloses a fastener for connecting the outer end of a ceiling panel in an aircraft to a storage bin, the fastener comprising a first body portion including journal means, a second body portion including channel means for slidably receiving the journal means, disengageable lock means for locking the journal means in the channel, means for attaching the first body portion to one of the structural members and means for attaching the second body portion to the other structural members.

A dual stage fastener for securing a vehicle interior trim component to a vehicle body component to cover an air curtain during storage is known from the US 6 431 585. The fastener includes a grommet with an aperture and a pin tethered to the grommet.

### Summary of the invention

The present invention relates to a holder, in particular for a light cover in an aircraft for attaching the light cover to a structure of the aircraft. According to an aspect of the present invention, the holder achieves the attachment of the light cover to the structure of the aircraft by a pin and shoe principle. A mounting section which may be attached to the structure of the aircraft may be provided which according to a further aspect of the present invention may be attached by a pin to a shoe receiving section. In an open position of the holder, a shoe which may be attached to the light cover may be slid into or onto the shoe receiving section. Then, by rotating the receiving section, the holder may be closed. This closed position may be secured by a pin which, when the shoe receiving section is rotated, goes into engagement with a corresponding closure element such that the shoe receiving section and the mounting section are attached to each other in the closed position.

In the following, exemplary embodiments of the present invention will be described with reference to the following Figures:
Fig. 1 shows a three-dimensional representation of a first exemplary embodiment of a holder according to the present invention in an open position.
Fig. 2 shows another three-dimensional representation of the holder of Fig. 1 in a position between the open position and a closed position.
Fig. 3 shows another three-dimensional representation of the holder of Fig. 2 in the closed position.
Fig. 4 shows another three-dimensional representation of a second exemplary embodiment of a holder according to the present invention.
Fig. 5 shows a cross-sectional view of the holder of Fig. 4.

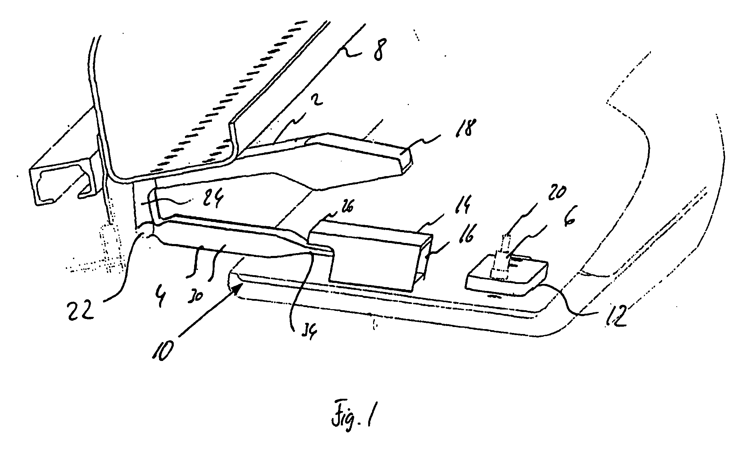

In the following description of exemplary embodiments of the present invention relating to Figs. 1 - 5, the same reference numerals are used for the same or corresponding elements.

Fig. 1 shows a three-dimensional representation of a first exemplary embodiment of a holder according to the present invention in an open position. In the following description, the holder is described with respect to a holder for mounting a light cover to a structure of an aircraft. It should, however, be noted that the holder is not limited to these exemplary embodiments and may be applied in different fields such as, for example, in motor vehicles or in building applications.

Reference numeral 2 in Fig. 1 designates a mounting bracket which is adapted for attachment to a structure 8 of the aircraft. The mounting bracket may screwed, clipped or glued to the aircraft structure 8 or may be attached to the aircraft structure 8 by any other suitable attachment method. The mounting bracket is provided with a cut-out 18 for accommodating a closure element (not shown in Fig. 1) for an engagement with a head 20 of a pin 6. A pin mount 12 may be provided for mounting or attaching the pin 6 to a light cover 10. According to an aspect of this exemplary embodiment of the present invention, the pin 6 may be a stud pressure fastener, such as, for example, described in the Airbus publication reference no. ABS0799.

The mounting bracket 2 is furthermore provided with a connector element 24 which, as may be taken from Fig. 1, extends essentially perpendicular to a main portion of the mounting bracket 2, for example to the portion of the mounting bracket 2 which is attached to the structure of the aircraft 8. At an end of the connector element 24 facing away from the aircraft structure 8 or the main portion of the mounting bracket 2, there is provided a hinge 22 for connecting the mounting bracket 2 to a shoe bracket 4. As may be taken from Fig. 1, the mounting bracket 2 including the connector element 24 may essentially have an L-form. The shoe bracket 4 may essentially have the form of a bar having a tapered end 34 which may be referred to as threading or fork section. Furthermore, between the fork section 34 and the other end of the shoe bracket 4 which is attached to the hinge 22, there is provided a shoe mount section 30.

Reference numeral 14 designates a shoe which is adapted for attachment to the light cover 10. The shoe may be attached to the light cover 10 by a suitable sliding and/or clipping attachment. However, it may also be glued or screwed or bolted to the light cover 10. The shoe 14 is provided with a shoe aperture 16. The shoe aperture 16 may be a hole but may also have an almost cross-sectional section as indicated in Fig. 1. Dimensions of the aperture 16 are adapted to dimensions of the shoe mount section 30, such that the shoe 14 may be slid into/or onto the shoe mount section 30 of the shoe bracket 4. According to an aspect of this exemplary embodiment, the shoe 14 may be provided with a nose 26, which, when the shoe is slid onto the shoe mount section 30, abuts to the connector element 24. By this, a position of the shoe and/or the light cover 10 with respect to the mounting bracket 2 or the structure 8 may be ensured. This may facilitate an alignment of the light cover 10 during assembly.

The hinge 22 may be realized by using a rotational axis. However, the hinge 22 may be also be realized by a suitable elastic connection between the mounting bracket 2 and the shoe bracket 4. Such a connection may be made of plastics.

Fig. 1 shows the holder according to this exemplary embodiment of the present invention in an open position where the shoe 14 attached to the light cover 10 can be slid onto the shoe bracket 4 which is facilitated by the threading section 34 and may then be slid onto the shoe mount section 30 of the shoe bracket 4.

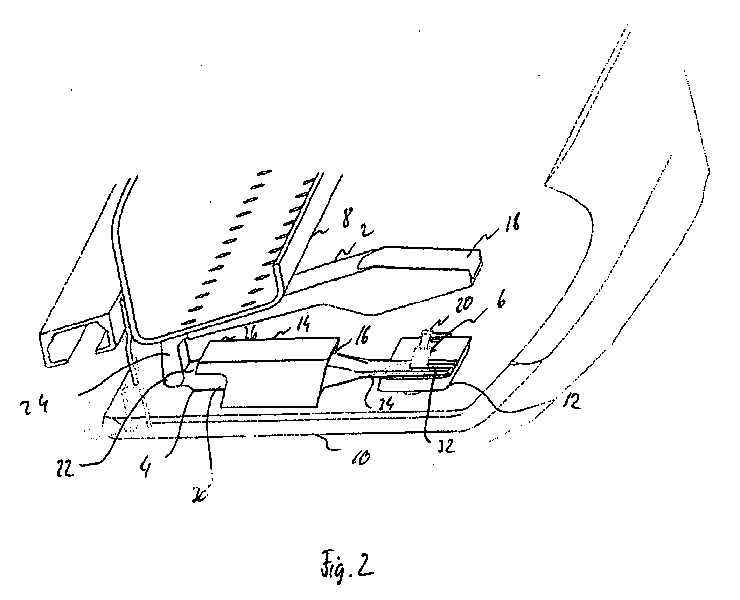

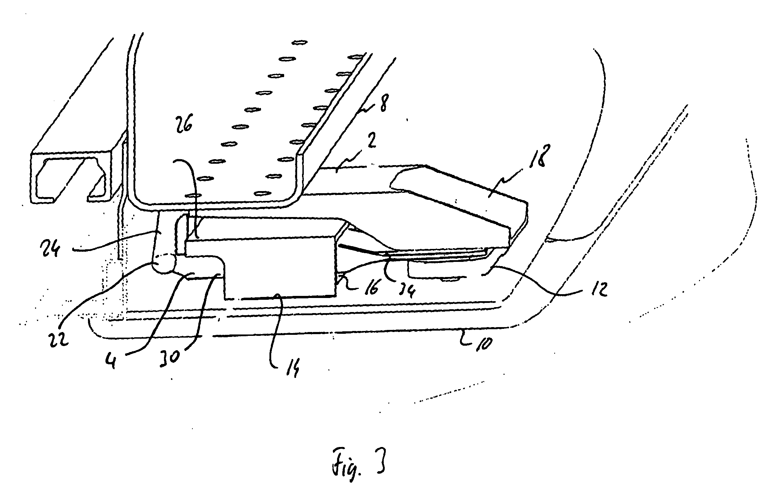

Fig. 2 shows another three-dimensional representation of the holder of Fig. 1 in a position between the open position of Fig. 1 and a closed position which is shown in Fig. 3. As may be taken from Fig. 2, the threading section 34 is provided with a recess 32 for receiving the pin 6. This may allow for a simple alignment of the pin 6 with the holder. In particular, this may facilitate an alignment of the pin 6 with the pin bracket (not shown in Fig. 2) accommodated in the cut-out 18 of the mounting bracket 2. As pin bracket, for example, a pin cushion, such as disclosed in Airbus publication reference no. ABS0794 may be used.

As indicated with reference to Fig. 1, the shoe 14 may be provided with a nose 26 for guiding the shoe bracket 4. However, as may be taken from Fig. 2, the alignment of the pin and/or the light cover 10 with respect to the holder and/or the structure 8 of the aircraft may also be realized by the pin 6 and the recess 32 in the fork section 34 of the shoe bracket 4. Thus, it should be noted that the nose 26 may be used for guiding the shoe bracket 4. However, the nose 26 may be optional.

Fig. 3 shows another three-dimensional representation of the holder of Fig. 1 in the closed position. As may be taken from Fig. 3, the main portions of the mounting bracket 2 and the shoe bracket 4 extend essentially parallel to each other. The pin 6 which is attached to the light cover 10 by means of the pin mount 12 extends through the recess 32 in the fork section 34 and is in engagement with the pin bracket (not shown in Fig. 3) accommodated in the cut-out 18 of the mounting bracket 2. The light cover 10 is secured to the structure 8 of the aircraft by means of the shoe 14, the pin 6, the mounting bracket 2 and the shoe bracket 4 interacting with each other.

In the following, a function and a method of operating the holder depicted in Figs. 1 - 3 is described with reference to Figs. 1 - 3.

As may be taken from Fig. 1, after attachment of the mounting bracket 2 to the structure 8 and of the shoe 14 and the pin 6 to the light cover 10, the fork section 34 is thread into the aperture 16 of the shoe 14. Then, the light cover 10 and therewith the shoe 14 is moved essentially towards a rotational axis of the hinge 22 whereby the shoe 14 is slid onto the shoe mount section 30 of the shoe bracket 4. The shoe 14 is slid onto the show mount section 30 until the pin 6 abuts to the end of the recess 32 in the fork section 34. This is depicted in Fig. 2. Then, the holder may be closed by rotating the shoe bracket 4 and/or the light cover 10 around the rotational axis of the hinge 22. When the pin 6 is in engagement with the corresponding pin bracket (not shown in Figs. 1 - 3) accommodated in the cut-out 18, the holder is in the closed position and the light cover 10 is affixed to the structure 8.

Advantageously, a very small holder may be provided which may be accommodated in a very narrow space. Furthermore, due to the fact that no loose elements are required during assembly, it may be avoided that loose elements are lost during assembly. Furthermore, the holder according to the present invention may allow for a very simple and fast assembly since the shoe may easily be slid into/onto the shoe bracket 4 and then attached by clicking the pin in the pin bracket. To release the light cover, the pin may just be released from the pin bracket. Then, the shoe bracket may be hinged down and the light cover may be slid off the shoe bracket 4. Furthermore, due to the fact that the light cover is attached at a plurality of points, a bending of the light cover due to its own weight may be avoided.

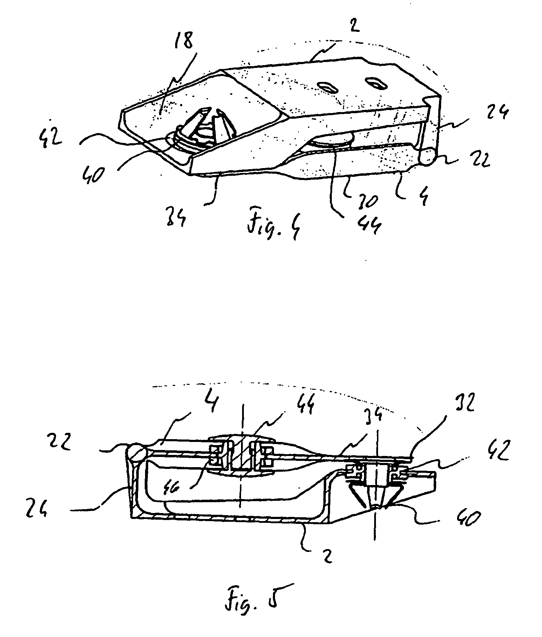

Fig. 4 shows another three-dimensional representation of a second exemplary embodiment of a holder according to the present invention. As may be taken from Fig. 4, a pin bracket 40 may be provided in the cut-out 18 of the mounting bracket 2. The pin bracket may be made of metal and comprise four inwardly bent springs for securing the head 20 of the pin 6. As pin bracket 40, the pin bracket as described in Airbus publication reference no. ABS0798, which is hereby incorporated by reference, may be used. The pin bracket 40 may be attached to the mounting bracket 2 by means of a pin bracket mount 42 which may be accommodated in a hole in the mounting bracket 2. The pin bracket mount may be a damper as, for example, described in Airbus publication ABS1002.

Furthermore, there are may be provided another damper 46 which is accommodated in the hole in the shoe bracket 4. This damper 46 may be used in combination with plungers 44 to attach the shoe bracket 4 to other elements.

Fig. 5 shows a longitudinal cross-sectional view of the holder of Fig. 4. As may be taken from Fig. 5, the pin bracket mount is provided with a hole in the metal such that the head 20 of the pin 6 may be inserted into the hole and may then go into engagement with the springs of the pin bracket 40.

Advantageously, the above described exemplary embodiments of the holder according to the present invention may allow for a facilitated assembly and deassembly of the light cover to a structure of the aircraft. The mounting bracket 2 and the shoe bracket 4 may be made of any suitable plastic or metal.

It should be noted, that the term "comprising" does not exclude other elements or steps and the "a" or "an" does not exclude a plurality and that a single processor or system may fulfil the functions of several means recited in the claims. Also elements described in association with different embodiments may be combined.

It should also be noted, that any reference signs in the claims shall not be construed as limiting the scope of the claims.

## Claims

1. Holder for a panel in an aircraft, the holder comprising:
a mounting section (2);
a shoe receiving section (4); and
a pin (6);
a shoe (14);
wherein the shoe (14) is adapted for attachment to the panel;wherein the mounting section (2) is attachable to a structure (8) of the aircraft; wherein the mounting section (2) is connected to the shoe receiving section (4) by a hinge (22);
wherein the mounting section (2), the shoe receiving section (4) and the pin (6) are adapted such that a pin and shoe principle is achieved such that the shoe (14) is slideable on the shoe receiving section (4) in an open position of the holder and such that the mounting section (2) and the shoe receiving section (4) are attached to each other by the pin in a closed position for securing the shoe (14) in the holder.

2. Holder of claim 1 further comprising:
a pin bracket (40); and
wherein the pin bracket (40) is arranged on the mounting section (2);
wherein the pin (6) is arranged to be attached to the panel;
wherein the holder has a closed position where the shoe (14) is secured on the holder;
wherein, in the closed position, the pin and the pin bracket (40) are in engagement with each other.

3. The holder of one of the claims 1 to 2,
wherein the mounting section (2) has a first end and a second end;
wherein the shoe receiving portion (4) has a third end and fourth end;
wherein the hinge (22) connects the first end and the third end;
wherein the pin bracket (40) is arranged on the second end; and
wherein a recess (32) is provided in the fourth end for receiving the pin such that when the holder is in the closed position, a first side of the pin is in the recess and a second side of the pin is in engagement with the pin bracket (40).

4. Holder of claim 1, further comprising:
a pin bracket (40);
wherein the pin bracket (40) is arranged on one of the mounting section (2) and the shoe receiving section (4);
wherein the pin (6) is attached to a respective other one of the mounting section (2) and the shoe receiving section (4);
wherein the holder has a closed position where the shoe (14) is secured on the holder;
wherein, in the closed position, the pin and the pin bracket (40) are in engagement with each other.

5. The holder of one of claims 1 to 4,
wherein the shoe (14) is provided with an aperture (16);
wherein the aperture (16) has first dimensions;
wherein the first dimensions are adapted in accordance with second dimensions of the shoe receiving section (4) such that the shoe is slideable onto the shoe receiving section (4).

6. The holder of one of claims 2 to 5,
wherein the pin (6) and the pin bracket (40) are adapted such that the are detachably connectable to each other.

7. The holder of one of claims 1 to 6,
wherein the holder is adapted for mounting a light cover in a pressure cabin of an aircraft to a structure of the aircraft.

8. Method of attaching a panel to a structure of an aircraft, the method comprising the steps of:
sliding a shoe (14) on a shoe receiving section (4) of a holder according to one of the claims 1 to 7 attachable to the structure; and
rotating the shoe receiving section (4) such that a first closure element (6) is in engagement with a corresponding second closure element (40) at a mounting section (2) of the holder.

9. The method of claim 8,
wherein the shoe (14) is slid on the receiving section until an end of the receiving section hits the first closure element (6).

## Patentansprüche

1. Halter für ein Panel in einem Luftfahrzeug, der Halter umfassend:
einen Befestigungsabschnitt (2);
einen Schuhaufnahmeabschnitt (4); und
einen Stift (6);
einen Schuh (14);
wobei der Schuh (14) zum Anbringen an dem Panel angepasst ist; wobei der Befestigungsabschnitt (2) an einer Struktur (8) des Luftfahrzeugs anbringbar ist;
wobei der Befestigungsabschnitt (2) mit dem Schuhaufnahmeabschnitt (4) durch ein Gelenk (22) verbunden ist;
wobei der Befestigungsabschnitt (2), der Schuhaufnahmeabschnitt (4) und der Stift (6) derart angepasst sind, dass ein Stift- und Schuh-Prinzip erreicht wird, so dass der Schuh (14) auf dem Schuhaufnahmeabschnitt (4) in einer geöffneten Stellung des Halters verschiebbar ist und so dass der Befestigungsabschnitt (2) und der Schuhaufnahmeabschnitt (4) durch den Stift in einer geschlossenen Stellung zum Sichern des Schuhs (14) in dem Halter aneinander angebracht sind.

2. Halter nach Anspruch 1, weiter umfassend:
eine Stiftklammer (40); und
wobei die Stiftklammer (40) an dem Befestigungsabschnitt (2) angeordnet ist;
wobei der Stift (6) angeordnet ist, so dass er an dem Panel angebracht ist;
wobei der Halter eine geschlossene Stellung aufweist, in der der Schuh (14) am Halter gesichert ist;
wobei in der geschlossenen Stellung der Stift und die Stiftklammer (40) miteinander in Eingriff stehen.

3. Halter nach einem der Ansprüche 1 oder 2,
wobei der Befestigungsabschnitt (2) ein erstes Ende und ein zweites Ende aufweist;
wobei der Schuhaufnahmeabschnitt (4) ein drittes Ende und ein viertes Ende aufweist;
wobei das Gelenk (22) das erste Ende und das dritte Ende verbindet;
wobei die Stiftklammer (40) an dem zweiten Ende angeordnet ist; und
wobei eine Vertiefung (32) in dem vierten Ende zum Aufnehmen des Pins bereitgestellt ist, so dass, wenn sich der Halter in der geschlossenen Stellung befindet, eine erste Seite des Stifts sich in der Vertiefung befindet und eine zweite Seite des Stifts im Eingriff mit der Stiftklammer (40) steht.

4. Halter nach Anspruch 1, weiter umfassend:
eine Stiftklammer (40);
wobei die Stiftklammer (40) an einem aus dem Befestigungsabschnitt (2) und dem Schuhaufnahmeabschnitt (4) angeordnet ist;
wobei der Stift (6) an dem jeweils anderen aus dem Befestigungsabschnitt (2) und dem Schuhaufnahmeabschnitt (4) angebracht ist;
wobei der Halter eine geschlossene Stellung aufweist, in der der Schuh (14) an dem Halter gesichert ist;
wobei in der geschlossenen Stellung der Stift und die Stiftklammer (40) miteinander in Eingriff stehen.

5. Halter nach einem der Ansprüche 1 bis 4,
wobei der Schuh (14) mit einer Öffnung (16) bereitgestellt ist;
wobei die Öffnung (16) erste Abmessungen aufweist;
wobei die ersten Abmessungen in Übereinstimmung mit zweiten Abmessungen des Schuhaufnahmeabschnitts (4) derart angepasst ist, dass der Schuh auf dem Schuhaufnahmeabschnitt (4) verschiebbar ist.

6. Halter nach einem der Ansprüche 2 bis 5,
wobei der Stift (6) und die Stiftklammer (40) derart angepasst sind, dass sie miteinander trennbar verbunden sind.

7. Halter nach einem der Ansprüche 1 bis 6,
wobei der Halter zum Befestigen einer Lichtabdeckung in einer Druckkabine eines Luftfahrzeugs an eine Struktur des Luftfahrzeugs angepasst ist.

8. Verfahren zum Anbringen eines Panels an eine Struktur eines Luftfahrzeugs, das Verfahren umfassend die Schritte:
Verschieben eines Schuhs (14) auf einem Schuhaufnahmeabschnitt (4) eines Halters gemäß einem der Ansprüche 1 bis 7, der an der Struktur anbringbar ist; und
Rotieren des Schuhaufnahmeabschnitts (4), so dass ein erstes Verschlusselement (6) in Eingriff mit einem entsprechenden zweiten Verschlusselement (40) bei einem Befestigungsabschnitt (2) des Halters in Eingriff gebracht wird.

9. Verfahren nach Anspruch 8,
wobei der Schuh (14) auf dem Aufnahmeabschnitt verschoben wird bis ein Ende des Aufnahmeabschnitts das erste Verschlusselement (6) trifft.

## Revendications

1. Attache de panneau dans un avion, l'attache comportant :
une partie de montage (2),
une partie de réception de sabot (4), et
un axe (6),
un sabot (14),
dans laquelle le sabot (14) est adapté pour une fixation au panneau,
dans laquelle la partie de montage (2) peut être fixée à une structure (8) de l'avion,
dans laquelle la partie de montage (2) est reliée à la partie de réception de sabot (4) par une articulation (22),
dans laquelle la partie de montage (2), la partie de réception de sabot (4) et l'axe (6) sont adaptés de manière à obtenir un principe de fixation par axe et sabot de telle sorte que le sabot (14) peut coulisser sur la partie de réception de sabot (4) dans une position ouverte de l'attache, et de telle sorte que la partie de montage (2) et la partie de réception de sabot (4) sont fixées l'une à l'autre par l'intermédiaire de l'axe dans une position fermée pour assujettir le sabot (14) dans l'attache.

2. Attache selon la revendication 1, comportant en outre :
un support d'axe (40), et
dans laquelle le support d'axe (40) est agencé sur la partie de montage (2),
dans laquelle l'axe (6) est conçu pour être fixé au panneau,
dans laquelle l'attache a une position fermée où le sabot (14) est assujetti sur l'attache,
dans laquelle, dans la position fermée, l'axe et le support d'axe (40) sont en prise l'un avec l'autre.

3. Attache selon l'une des revendications 1 et 2,
dans laquelle la partie de montage (2) a une première extrémité et une deuxième extrémité,
dans laquelle la partie de réception de sabot (4) a une troisième extrémité et une quatrième extrémité,
dans laquelle l'articulation (22) relie la première extrémité et la troisième extrémité,
dans laquelle le support d'axe (40) est agencé sur la deuxième extrémité, et
dans laquelle un évidement (32) est agencé dans la quatrième extrémité pour recevoir l'axe de telle sorte que lorsque l'attache est dans la position fermée, un premier côté de l'axe est dans l'évidement et un second côté de l'axe est en prise avec le support d'axe (40).

4. Attache selon la revendication 1, comportant également :
un support d'axe (40),
dans laquelle le support d'axe (40) est agencé sur une partie parmi la partie de montage (2) et la partie de réception de sabot (4),
dans laquelle l'axe (6) est fixé à une autre partie respective parmi la partie de montage (2) et la partie de réception de sabot (4),
dans laquelle l'attache a une position fermée où le sabot (14) est fixé à l'attache,
dans laquelle, dans la position fermée, l'axe et le support d'axe (40) sont en prise l'un avec l'autre.

5. Attache selon l'une des revendications 1 à 4,
dans laquelle le sabot (14) est muni d'une ouverture (16),
dans laquelle l'ouverture (16) a des premières dimensions,
dans laquelle les premières dimensions sont adaptées en fonction de secondes dimensions de la partie de réception de sabot (4) de telle sorte que le sabot peut coulisser sur la partie de réception de sabot (4).

6. Attache selon l'une des revendications 2 à 5,
dans laquelle l'axe (6) et le support d'axe (40) sont adaptés de telle sorte qu'ils peuvent être reliés l'un à l'autre de manière séparable.

7. Attache selon l'une des revendications 1 à 6,
dans laquelle l'attache est adaptée pour monter un cache-lumière dans une cabine pressurisée d'un avion sur une structure de l'avion.

8. Procédé pour fixer un panneau à une structure d'un avion, le procédé comportant les étapes consistant à :
faire coulisser un sabot (14) sur une partie de réception de sabot (4) d'une attache selon l'une des revendications 1 à 7 pouvant être fixée à la structure, et
faire tourner la partie de réception de sabot (4) de telle sorte qu'un premier élément de fermeture (6) est en prise avec un second élément de fermeture correspondant (40) sur une partie de montage (2) de l'attache.

9. Procédé selon la revendication 8,
dans lequel le sabot (14) coulisse sur la partie de réception jusqu'à ce qu'une extrémité de la partie de réception heurte le premier élément de fermeture (6).
